# FASCICULE DE BREVET EUROPEEN

(11) **EP 1 466 231 B1**
(45) Date de publication et mention de la délivrance du brevet: **03.04.2013**
(21) Numéro de dépôt: 02805414.6
(22) Date de dépôt: 20.12.2002
(51) Int. Cl.: G06F 21/00, G07F 7/10

(54) **UNITE ELECTRONIQUE AGENCEE DANS UNE CARTE A MICROCIRCUIT ET INCLUANT DES MOYENS DE CRYPTOGRAPHIE CAPABLES DE TRAITER DES INFORMATIONS A HAUT DEBIT**
IN EINER MIKROSCHALTUNGSKARTE VORGESEHENE ELEKTRONISCHE EINHEIT MIT KRYPTOGRAPHISCHEN MITTELN ZUR SCHNELLEN DATENVERARBEITUNG
ELECTRONIC UNIT PROVIDED IN A MICROCIRCUIT CARD AND INCLUDING CRYPTOGRAPHIC MEANS FOR HIGH-SPEED DATA PROCESSING

(30) Priorité: 21.12.2001 FR 0116733
(43) Date de publication de la demande: 13.10.2004
(73) Titulaire: Oberthur Technologies, 92700 Colombes (FR)
(72) Inventeur: FISCHER, Jean-Bernard, F-94270 Le Kremlin-Bicetre (FR)
(74) Mandataire: Quantin, Bruno Marie Henri
(86) Numéro de dépôt international: PCT/FR2002/004508
(87) Numéro de publication internationale: WO 2003/054670

(56) Documents cités:
- WO-A-00/76119
- WO-A-98/07255
- US-A1- 2001 011 353
- US-B1- 6 327 647

## Description

L'invention se rapporte à une unité électronique comprenant un processeur, des moyens d'entrée-sortie de données et des moyens de cryptographie ; elle concerne plus particulièrement un nouvel agencement de ces différents sous-ensembles permettant d'accélérer le traitement cryptographique de certaines données.

Une unité électronique connue incorporant des moyens de cryptographie est agencée autour d'un processeur associé à ses différentes mémoires (de type RAM, ROM et EEPROM, par exemple) et relié à des moyens d'entrée-sortie. Le processeur est couplé aux moyens de cryptographie, par l'intermédiaire d'un registre mémoire. Les moyens de cryptographie sont généralement constitués par des circuits électroniques dédiés aux calculs cryptographiques et spécialement conçus pour réaliser très rapidement ces calculs. Les opérations réalisées sont, par exemple, des opérations de chiffrement et de déchiffrement par un protocole DES. Dans le domaine des cartes à microcircuit, il existe aujourd'hui des unités cryptographiques très légères, contenant de l'ordre de 5 000 portes logiques, capables de réaliser des calculs DES en 16 coups d'horloge seulement. En comparaison, la copie de 8 octets dans un registre (longueur d'un mot en chiffrement DES) nécessite 48 coups d'horloge. Les moyens d'entrée-sortie sont par exemple une interface de type UART échangeant des informations avec l'extérieur de ladite unité électronique selon le protocole ISO7816 ou USB (Universal Serial Bus, en anglais). L'interface UART comporte un registre. De façon connue, les moyens de cryptographie (on parle généralement d'une unité de calcul cryptographique) sont directement reliés au processeur, qui gère entièrement le transfert des données à encrypter ou décrypter vers les moyens de cryptographie, le déroulement des opérations de cryptage/décryptage et le renvoi des résultats vers les moyens d'entrée-sortie. On conçoit donc que ce mode de fonctionnement, qui monopolise à chaque étape le processeur, soit relativement lent et implique une consommation d'énergie relativement importante. L'invention permet de surmonter ces inconvénients.

On connaît déjà du document US 2001/0011353 une unité électronique comportant un processeur, des moyens d'entrée-sortie comportant une unité d'émission-réception du type dit UART, un co-processeur associé un registre-mémoire, avec une liaison directe de transmission bidirectionnelle de données établie entre cette unité UART et les moyens de cryptographie, mais cette liaison directe permet des échanges directs entre ce co-processeur et un hôte-maître qui, postérieurement à une autorisation du processeur, contrôle totalement l'UART, en utilisant qu'une faible partie des éléments de celle-ci, tandis que cette UART et le processeur sont en régime de puissance minimale.

Plus particulièrement, l'invention concerne une unité électronique telle que définie à la revendication 1.

Elle concerne également une carte à microcircuit comportant une telle unité électronique.

Selon un mode de réalisation, l'unité d'émission-réception comporte des moyens d'aiguillage des données vers lesdits moyens de cryptographie. En d'autres termes, l'unité dite UART peut être complétée de façon simple (à la portée de l'homme du métier) par des "moyens d'aiguillage" transmettant les données au registre- mémoire, puis à l'unité de calcul cryptographique, dès lors que les informations ont été identifiées comme relevant d'un traitement cryptographique, les moyens d'entrée-sortie comportant aussi des moyens pour identifier de telles informations.

Au contraire, si l'unité d'émission-réception du type dit UART n'est pas conçue pour piloter directement les moyens de cryptographie, le processeur, relié à ces moyens de cryptographie, peut être programmé pour établir ladite liaison directe en réponse à un message transmis par lesdits moyens d'entrée-sortie. Dans ce cas, le rôle du processeur se borne à identifier l'apparition d'une série de données concernées par un traitement cryptographique, à établir ladite liaison directe pour que les informations s'acheminent directement vers les moyens de cryptographie et soient ré-émises vers les moyens d'entrée-sortie après traitement, et à transmettre une clé et un ordre de cryptage/décryptage.

L'invention sera mieux comprise et d'autres avantages apparaîtront plus clairement à la lumière de la description qui va suivre de plusieurs modes de réalisation d'une unité électronique conforme à son principe, donnée uniquement à titre d'exemple et faite en référence aux dessins annexés dans lesquels:
- la figure 1 est un schéma-bloc d'une unité électronique conforme à la technique antérieure ;
- la figure 2 est un schéma-bloc analogue à la figure 1, illustrant un mode de réalisation possible d'une unité électronique conforme à l'invention ;
- la figure 3 illustre une variante de l'unité électronique conforme à l'invention ;
- la figure 4 est un schéma montrant des données d'entrée et des données de sortie selon un mode de mise en oeuvre de l'invention; et
- la figure 5 est un schéma montrant des données d'entrée et des données de sortie selon un autre mode de mise en oeuvre de l'invention.

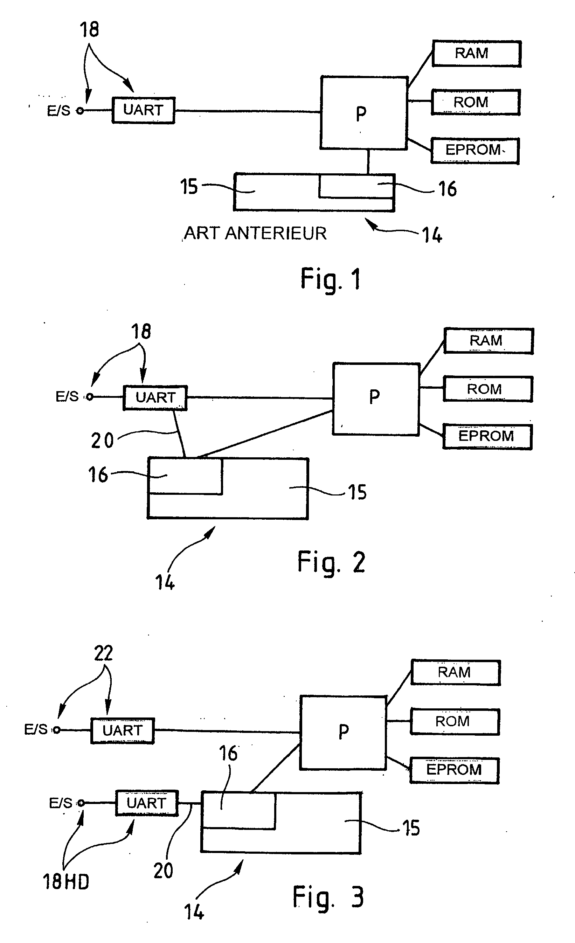

L'unité électronique 11 conforme à l'art antérieur, représentée sur la figure 1, comporte principalement un processeur P associé de façon classique à un certain nombre de mémoires (du type RAM, ROM, EEPROM), des moyens de cryptographie 14 comprenant une unité de calcul cryptographique 15 et un registre mémoire 16, et des moyens d'entrée-sortie 18 reliés, par exemple, à un réseau. Les moyens d'entrée-sortie 18, permettant à l'unité électronique de communiquer avec un réseau ou une entité électronique extérieure, comprennent essentiellement une unité d'émission-réception asynchrone de type dit UART. Les moyens de cryptographie 14 sont également reliés au processeur via le registre mémoire 16. Les autres mémoires couplées au processeur sont classiques. On distingue par exemple une mémoire à accès direct RAM, une mémoire morte ROM et une mémoire non volatile EEPROM.

Lorsque cette unité électronique reçoit via l'UART des données qui doivent être soumises à un traitement cryptographique (cryptage, décryptage....), l'UART transmet un message d'interruption au processeur P. Le processeur P vient alors lire le registre de l'UART et copier les données en RAM. Le processeur initialise alors les moyens de cryptographie, en fournissant notamment à l'unité cryptographique 15 les clés nécessaires. Le processeur P va ensuite lire les données à traiter dans la RAM et les copie dans le registre 16, puis déclenche le calcul de l'unité cryptographique. Afin d'être communiqué au réseau extérieur, le résultat calculé par l'unité cryptographique est ensuite lu dans le registre 16 et copié dans le registre UART par le processeur P. Les résultats sont réinscrits dans le registre 16, relus par le processeur et renvoyés vers le réseau via l'unité UART.

Un tel mode de fonctionnement n'est pas favorable au traitement cryptographique de haut débit de données par l'unité électronique. L'opération de copie des données, réalisée par le processeur P, dans une zone mémoire RAM intermédiaire, avant traitement par l'unité cryptographique, est tout particulièrement pénalisante. Or, on souhaite augmenter la puissance de calcul cryptographique d'une telle unité électronique afin de pouvoir traiter des flux importants et continus de données en temps réel.

A titre d'exemple, on veut pouvoir actuellement procéder au déchiffrement en temps réel de données numériques représentatives d'un son. De telles données sont compressées selon la norme MP3 et transmises à une vitesse de 128 kbits/s. L'unité électronique chargée du déchiffrement en temps réel nécessite donc de pouvoir absorber et traiter des informations à haut débit. En outre, comme l'unité électronique qui va être décrite ci-dessous peut avantageusement être logée dans une carte à microcircuit, un tel traitement cryptographique voit sa sécurité augmentée du simple fait que la ou les clés de déchiffrement ne sortent jamais de la carte.

Pour ce faire, on établit une liaison directe de transmission bidirectionnelle de données entre les moyens d'entrée-sortie (c'est-à-dire typiquement l'unité d'émission-réception du type UART) et les moyens de cryptographie. On peut par exemple adopter l'agencement décrit à la figure 2.

L'unité d'émission-réception UART est reliée au processeur, lequel est classiquement associé à ses différentes mémoires (RAM, ROM, EEPROM) comme dans le cas de la figure 1. Par ailleurs, l'unité électronique comprend, comme précédemment, des moyens de cryptographie 14 incluant une unité de calcul cryptographique 15 associée à un registre mémoire 16. Le processeur est relié à ces moyens de cryptographie via le registre mémoire. Cependant, une liaison directe de transmission bidirectionnelle de données 20 est aussi établie entre les moyens d'entrée-sortie UART et les moyens de cryptographie, en l'occurrence, ici, ce même registre mémoire 16.

Idéalement, l'unité d'émission-réception comporte des moyens d'aiguillage des données vers les moyens de cryptographie. Autrement dit, cette unité est agencée pour analyser les informations transmises par le réseau extérieur et reconnaître celles qui sont destinées à subir un traitement de cryptographie. Cette reconnaissance effectuée, les moyens d'entrée-sortie acheminent directement ces informations vers le registre mémoire 16 des moyens de cryptographie. Le processeur, quant à lui, transmet les clés aux moyens de cryptographie, définit le mode de fonctionnement (par exemple cryptage ou décryptage, avec ou sans chaînage) et émet un ordre permettant le déclenchement du traitement cryptographique. Pendant ce temps, c'est-à-dire après le lancement du traitement cryptographique, le processeur n'intervient plus dans le processus cryptographique ni même dans le transfert des résultats vers l'extérieur ; il en résulte donc une moindre consommation d'énergie. La sécurité est également augmentée du fait que les informations ne sont plus stockées dans la mémoire principale liée au processeur.

En d'autres termes, cette unité d'émission-réception comporte un moyen pour établir une liaison directe avec les moyens de cryptographie.

Ces moyens sont rudimentaires, avec peu d'intelligence, car comme il s'agit d'une carte à puce, les composants doivent être peu complexes et de coût modéré. Il ne s'agit donc surtout pas d'un interpréteur de commande. L'UART n'est pas capable d'interpréter des commandes reçues par le port E/S.

Si l'unité d'émission-réception UART n'est pas conçue pour détecter elle-même une séquence concernée par le traitement de cryptographie, cette fonction peut être assurée par le processeur P sans perte de temps excessive. On peut par exemple imaginer que le premier paquet d'un message destiné à subir le traitement de cryptographie décrive le contenu des paquets suivants. Dans ce cas, le processeur recevant ce premier paquet est capable de commander "l'aiguillage", c'est-à-dire d'établir la liaison directe de transmission bidirectionnelle de données 20 qui est établie entre les moyens d'entrée-sortie et les moyens de cryptographie, ceci pour le temps nécessaire à recevoir et/ou renvoyer les informations traitées par les moyens de cryptographie. La mise en place de cette liaison directe est décidée par le microprocesseur P afin d'optimiser la vitesse de traitement pour traiter un flux important de données.

Dans le dispositif de la figure 3, où les sous-ensembles analogues à ceux de la figure 1 portent les mêmes références numériques, on a séparé les informations concernant la cryptographie des autres données. Les moyens d'entrée-sortie 18HD reliés à un accès haut débit sont cette fois exclusivement et directement reliés aux moyens de cryptographie (liaison directe 20), tandis que les autres informations sont adressées à d'autres moyens d'entrée-sortie 22 et parviennent au processeur via une autre unité d'émission-réception, par exemple du type UART. Le processeur peut ainsi communiquer avec un serveur en parallèle, via un port "standard", les données cryptographiques étant transmises via un port à haut débit, par exemple du type USB. Aucun aiguillage n'est ainsi nécessaire.

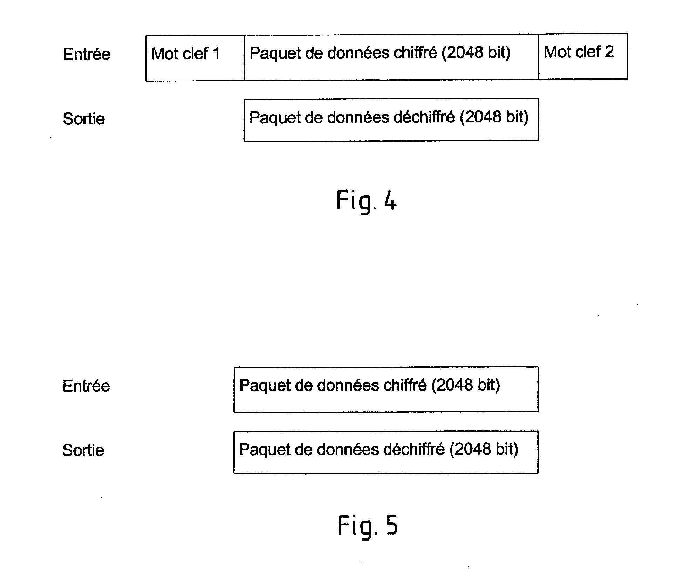

Les figures 4 et 5 schématisent les formats de données qui peuvent être traités selon l'invention.

Ainsi, à la figure 4, en entrée arrive un paquet de données chiffré (2048 bits) précédé d'un mot-clef 1 et suivi d'un mot-clef 2, et en sortie on a un paquet de données déchiffré (2048 bits).

Par des mécanismes sécuritaires (par exemple authentification de l'émetteur et éventuellement échange de clefs), le processeur autorise le déchiffrement du prochain paquet de données reçu. Le processeur transmet la clef de décryptage à l'unité de calcul cryptographique 15 et émet l'ordre permettant le déclenchement du traitement. Le processeur envoie également un message à l'UART afin qu'elle aiguille les paquets de données directement vers l'unité de calcul cryptographique 15 lorsqu'elle reconnaît le mot clef 1, et qu'elle arrête d'envoyer les données vers l'unité de calcul cryptographique 15 lorsqu'elle reconnaît le mot clef 2. L'unité de calcul cryptographique 15 déchiffre ensuite le paquet de données. Le résultat du calcul est ensuite directement communiqué à l'extérieur de la carte par l'UART.

A la figure 5, on a en entrée et en sortie des paquets de données, chiffré ou déchiffré respectivement.

Par des mécanismes sécuritaires (par exemple authentification de l'émetteur et éventuellement échange de clefs), le processeur autorise le déchiffrage du prochain paquet de données reçu dont il sait à l'avance que celui-ci fera 2048 bits. Le processeur transmet la clef de décryptage à l'unité de calcul cryptographique 15 et émet l'ordre permettant le déclenchement du traitement. Le processeur envoie également un message à l'UART afin qu'elle aiguille les 2048 prochains bits de données reçus directement vers l'unité de calcul cryptographique 15, et qu'elle envoie les 2048 bits du résultat du traitement cryptographique en sortie de l'unité de calcul cryptographique 15 à l'extérieur de la carte et qu'elle aiguille ensuite à nouveau les données en entrée de l'UART vers le processeur..

## Revendications

1. Unité électronique comprenant un processeur (P), des moyens d'entrée-sortie (18) de données comportant une unité d'émission-réception du type dit UART et des moyens de cryptographie (14) comprenant un registre-mémoire (16) formant un espace mémoire commun partagé par lesdits moyens d'entrée-sortie et lesdits moyens de cryptographie, **caractérisée en ce que** l'unité électronique est agencée dans une carte à microcircuit et **en ce que** l'unité UART et le processeur sont conçus de telle sorte que, lorsque des informations reçues de l'extérieur sont reconnues comme étant destinées à subir un traitement de cryptographie, une liaison directe de transmission bidirectionnelle de données (20) est établie entre l'unité UART desdits moyens d'entrée-sortie et le registre mémoire desdits moyens de cryptographie pour transmettre directement lesdites informations aux moyens de cryptographie et un ordre est transmis par le processeur aux moyens de cryptographie, ainsi qu'une clef de décryptage, pour permettre le déclenchement du traitement cryptographique desdites informations selon un mode de fonctionnement choisi par ce processeur.

2. Unité électronique selon la revendication 1, **caractérisée en ce que** ladite unité d'émission-réception (18, 18HD) comporte des moyens d'aiguillage des données vers lesdits moyens de cryptographie, étant agencée pour analyser les informations qui lui sont transmises par le réseau extérieur et reconnaître lesdites informations destinées à subir un traitement de cryptographie.

3. Unité électronique selon la revendication 1, **caractérisée en ce que** ledit processeur (P) est relié à l'UART et auxdits moyens de cryptographie pour, en réponse à un message transmis par lesdits moyens d'entrée-sortie dans lequel il a reconnu lesdites informations, établir ladite liaison directe (20) et transmettre ledit ordre de déclenchement et ladite clé.

4. Unité électronique selon la revendication 2, **caractérisée en ce que** lesdits moyens d'entrée-sortie (18 HD) sont dédiés à certaines informations destinées à être traitées par lesdits moyens de cryptographie, d'autres moyens d'entrée-sortie (22) étant reliés audit processeur pour le traitement d'autres informations.

5. Unité électronique selon l'une des revendications précédentes, **caractérisée en ce qu'**elle constitue des moyens de déchiffrement en temps réel de données chiffrées représentatives d'un son.

6. Unité électronique selon l'une quelconque des revendications précédentes, **caractérisé en ce qu'**elle comporte des moyens de traitement par cryptage ou décryptage d'un flux de paquets de données numérique.

7. Unité électronique selon ta revendication 3, **caractérisé en ce que** le processeur est conçu pour établir la liaison directe pour le temps nécessaire à recevoir et/ou à renvoyer les informations traitées par les moyens de cryptographie.

## Claims

1. Electronic unit comprising a processor (P), data input-output means (18) comprising a transmission-reception unit of the so-called UART type and cryptography means (14) comprising a memory register (16) forming a common memory space shared by said input-output means and said cryptography means, **characterised in that** the electronic unit is arranged in a microcircuit card and **in that** the UART unit and the processor are designed such that, when information received from outside is recognised as being intended to undergo cryptography processing, a direct bidirectional data transmission link (20) is set up between the UART unit of said input-output means and the memory register of said cryptography means to directly transmit said information to the cryptography means and an instruction is transmitted by the processor to the cryptography means, as well as a decryption key, to enable the cryptographic processing of said information to be triggered according to an operating mode chosen by this processor.

2. Electronic unit according to claim 1, **characterised in that** said transmission-reception unit (18, 18HD) comprises means for switching data to said cryptography means, being arranged to analyse the information which is transmitted to it by the outside network and recognise said information intended to undergo cryptography processing.

3. Electronic unit according to claim 1, **characterised in that** said processor (P) is linked to the UART and to said cryptography means to, in response to a message transmitted by said input-output means in which it has recognised said information, set up said direct link (20) and transmit said trigger instruction and said key.

4. Electronic unit according to claim 2, **characterised in that** said input-output means (18 HD) are dedicated to certain information intended to be processed by said cryptography means, other input-output means (22) being linked to said processor for the processing of other information.

5. Electronic unit according to one of the preceding claims, **characterised in that** it constitutes means for decrypting in real time encrypted data representative of a sound.

6. Electronic unit according to any one of the preceding claims, **characterised in that** it comprises means for processing by encrypting or decrypting a flow of packets of digital data.

7. Electronic unit according to claim 3, **characterised in that** the processor is designed to set up the direct link for the time needed to receive and/or return the information processed by the cryptography means.

## Patentansprüche

1. Elektronische Einheit, umfassend einen Prozessor (P), Daten-Eingabe-Ausgabe-Mittel (18) mit einer Sende-Empfangs-Einheit vom Typ UART und kryptographische Mittel (14), die ein Speicherregister (16) umfassen, das einen gemeinsamen Speicherplatz bildet, der von den Eingabe-Ausgabe-Mitteln und den kryptographischen Mitteln geteilt wird, **dadurch gekennzeichnet, dass** die elektronische Einheit in einer Mikroschaltungskarte vorgesehen ist, und dadurch, dass die UART-Einheit und der Prozessor so ausgelegt sind, dass, wenn von außen empfangene Informationen als dazu bestimmt, einer kryptographischen Verarbeitung unterzogen zu werden, erkannt werden, zwischen der UART-Einheit der Eingabe-Ausgabe-Mittel und dem Speicherregister der kryptographischen Mittel eine direkte Verbindung für bidirektionale Datenübertragung (20) hergestellt wird, um die Informationen direkt an die kryptographischen Mittel zu übertragen, und ein Befehl vom Prozessor an die kryptographischen Mittel übertragen wird, ebenso wie ein Entschlüsselungsschlüssel, um das Auslösen der kryptographischen Verarbeitung der Informationen gemäß einem von diesem Prozessor gewählten Betriebsmodus zu ermöglichen.

2. Elektronische Einheit nach Anspruch 1, **dadurch gekennzeichnet, dass** die Sende-Empfangs-Einheit (18, 18HD) Mittel zum Leiten der Daten hin zu den kryptographischen Mitteln umfasst, wobei sie vorgesehen ist, um die Informationen zu analysieren, die vom externen Netz an sie übertragen werden, und um die Informationen zu erkennen, die dazu bestimmt sind, einer kryptographischen Verarbeitung unterzogen zu werden.

3. Elektronische Einheit nach Anspruch 1, **dadurch gekennzeichnet, dass** der Prozessor (P) mit der UART und den kryptographischen Mitteln verbunden ist, um, als Antwort auf eine von den Eingabe-Ausgabe-Mitteln übertragene Nachricht, in der er die Informationen erkannt hat, die direkte Verbindung (20) herzustellen und den Auslösebefehl und den Schlüssel zu übertragen.

4. Elektronische Einheit nach Anspruch 2, **dadurch gekennzeichnet, dass** die Eingabe-Ausgabe-Mittel (18 HD) bestimmten Informationen gewidmet sind, die dazu bestimmt sind, von den kryptographischen Mitteln verarbeitet zu werden, wobei andere Eingabe-Ausgabe-Mittel (22) mit dem Prozessor für die Verarbeitung anderer Informationen verbunden sind.

5. Elektronische Einheit nach einem der vorhergehenden Ansprüche, **dadurch gekennzeichnet, dass** sie Mittel zum Dechiffrieren von chiffrierten Daten in Echtzeit, die für einen Ton bezeichnend sind, bildet.

6. Elektronische Einheit nach einem der vorhergehenden Ansprüche, **dadurch gekennzeichnet, dass** sie Mittel zur Verarbeitung durch Verschlüsselung oder Entschlüsselung eines digitalen Datenpaketflusses umfasst.

7. Elektronische Einheit nach Anspruch 3, **dadurch gekennzeichnet, dass** der Prozessor ausgelegt ist, um die direkte Verbindung während der Zeit herzustellen, die notwendig ist, um die von den kryptographischen Mitteln verarbeiteten Informationen zu empfangen und/oder zurückzusenden.
